# EUROPÄISCHE PATENTSCHRIFT

(11) **EP 0 752 335 B1**
(45) Veröffentlichungstag und Bekanntmachung des Hinweises auf die Patenterteilung: **09.12.1998**
(21) Anmeldenummer: 96104635.6
(22) Anmeldetag: 23.03.1996
(51) Int. Cl.: B60J 3/02

(54) **Sonnenblende für Fahrzeuge**
Sun visor for vehicles
Pare-soleil pour véhicules

(30) Priorität: 01.07.1995 DE 19524064
(43) Veröffentlichungstag der Anmeldung: 08.01.1997
(73) Patentinhaber: BECKER GROUP EUROPE GmbH, 42285 Wuppertal (DE)
(72) Erfinder: Beck, Frederic, 57730 Folschviller (FR); Lecorvaisier, René, 57470 Hombourg-Haut (FR)

(56) Entgegenhaltungen:
- EP-A- 0 403 846
- EP-A- 0 550 708
- DE-A- 4 031 482
- DE-C- 4 118 913

## Beschreibung

Die Erfindung bezieht sich auf eine Sonnenblende für Fahrzeuge, im wesentlichen bestehend aus einem plattenförmigen Sonnenblendenkörper aus Schaumkunststoff mit etwa rechteckiger Kontur, der eine eingelagerte Verstärkungseinlage und in einem Eckbereich ein damit verbundenes Lagergehäuse aufweist, welches mit einer sich etwa parallel zur oberen Längskante des Sonnenblendenkörpers erstreckenden Bohrung zur Aufnahme eines Endbereichs einer Sonnenblendenachse und mit einer etwa rechtwinklig in die Bohrung übergehenden Stecköffnung zur Aufnahme eines Stopfens ausgebildet ist, wobei die Sonnenblendenachse mit einem eingelagerten elektrischen Leiter und am lagergehäuseseitigen Endbereich mit einem außenliegenden Kontaktelement versehen ist und wobei der Stopfen aus einem Kunststoff-Spitzgußteil besteht und ein durch Umspritzen gehaltenes elektrisches Kontaktelement trägt, dessen den Stopfen einendig überragender Endbereich eine mit der Sonnenblendenachse kontaktierbare Kontaktfeder bildet und dessen den Stopfen anderendig überragender Endbereich für die Herstellung einer Verbindung mit einem Mikroschalter dient, der an einer am Sonnenblendenkörper sitzenden Spiegelkassette befestigt ist und von einer zur Spiegelkassette gehörenden Spiegelabdeckung betätigbar ist.

Eine Sonnenblende der gattungsgemäßen Art ist in der DE 40 31 482 A1 gezeigt. Bei dieser bekannten Sonnenblende erfolgt eine Stromzuführung für eine Beleuchtungseinrichtung über isolierte elektrische Leiterdrähte. Die elektrischen Leiterdrähte sind an den Endbereichen abisoliert und einerseits u. a. an einem an der Sonnenblendenachse angreifenden Kontaktelement und andererseits an Kontakzapfen eines Mikroschalters angelötet. Lötstellen sind aber relativ aufwendig herzustellen und bedeuten in der Praxis die einzigen immer wieder auftretenden Störungsstellen, die sich nicht mehr beheben lassen, weil sie sich im Schaummaterial des Sonnenblendenkörpers befinden. Eine bei der Endkontrolle festgestellte Störung im elektrischen Leitungssystem einer Sonnenblende ist damit fast immer gleichbedeutend mit dem Ausschuß der gesamten Sonnenblende.

Der Erfindung liegt hiernach die Aufgabe zugrunde, eine Sonnenblende der eingangs genannten Art mit elektrischen Verbindungsmitteln auszustatten, die sich durch eine besonders hohe Zuverlässigkeit auszeichnen sollen.

Diese Aufgabe wird erfindungsgemäß durch die im Patentanspruch 1 angegebenen Maßnahmen gelöst. In den Unteransprüchen sind vorteilhafte Weiterbildungen und zweckmäßige Ausgestaltungen der Erfindung angegeben.

Die erfindungsgemäßen Maßnahmen bringen den besonderen Vorteil einer absolut zuverlässigen Funktionssicherheit. Durch die Erfindung wird damit eine wesentliche Qualitätsverbesserung erreicht, die in besonders montagefreundlicher und kostengünstiger Weise realisierbar ist.

Ausführungsbeispiele der Erfindung werden nachfolgend anhand der Zeichnungen näher erläutert, und es zeigen:
- Fig. 1: eine Sonnenblende in Ansicht mit sichtbarer Darstellung der wesentlichen, im Sonnenblendenkörper angeordneten Funktionselemente,
- Fig. 2: einen Schnitt folgend der Linie A - A in Fig. 1 im vergrößerten Maßstab,
- Fig. 3: eine vergrößerte Darstellung des Lagergehäuses,
- Fig. 4: einen Schnitt folgend der Linie A - A in Fig. 1 im vergrößerten Maßstab in einer gegenüber Fig. 2 abgewandelten Ausführungsform und
- Fig. 5: eine Schnittdarstellung des Sonnenblendenkörpers in einer Fertigungsphase.

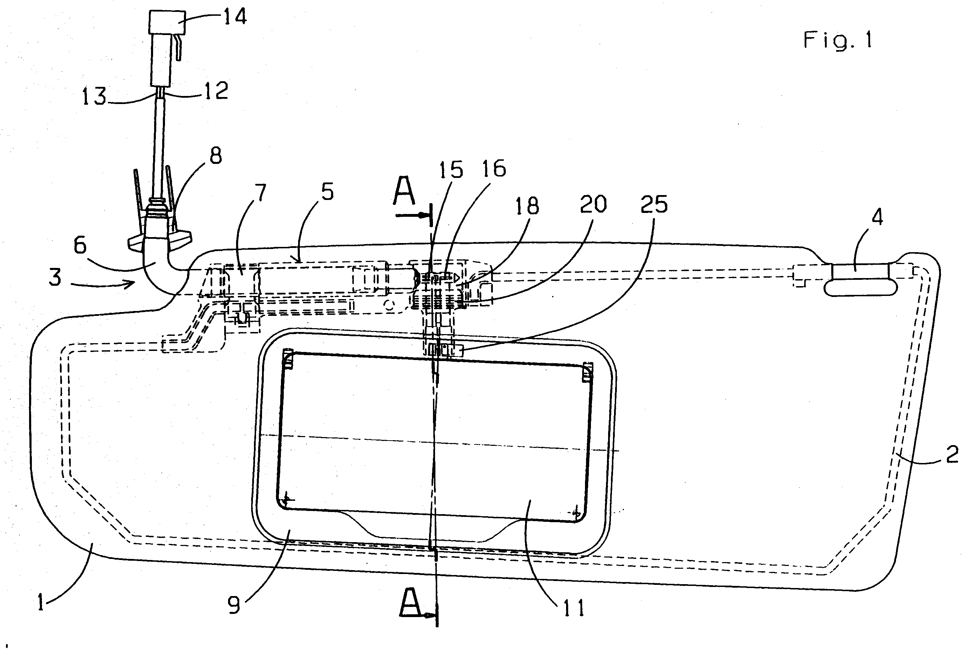

Fig. 1 zeigt eine Sonnenblende mit einem Sonnenblendenkörper 1 aus Schaumkunststoff, der durch eine Verstärkungseinlage 2 ausgesteift ist. Zur schwenkbeweglichen Anordnung des Sonnenblendenkörpers 1 in einem Fahrzeug ist ein Drehlager 3 und eine mit einem nichtgezeigten Gegenlagerböckchen zusammenwirkende Gegenlagerachse 4 vorgesehen.

Das Drehlager 3 besteht im einzelnen aus einem Lagergehäuse 5, das mit der Verstärkungseinlage 2 eine Einheit bildet, einer Sonnenblendenachse 6, die L-förmige gestaltet ist und einer den langen Schenkel der Sonnenblendenachse 6 radial klemmenden U-förmigen Rastfeder 7. Der kurze Schenkel der Sonnenblendenachse 6 ist drehbeweglich in einem, an einer Fahrzeugkarosserie befestigbaren Lagerböckchen 8 gelagert, so daß der Sonnenblendenkörper 1 auch zu einer Fahrzeugseitenscheibe hin geschwenkt werden kann.

Der Sonnenblendenkörper 1 trägt in einer Ausnehmung 29 eine Spiegelkassette 9 mit einem Spiegel 10, der bei Nichtgebrauch durch einen Deckel 11 abgedeckt werden kann. Zur Sonnenblende gehört weiterhin eine nichtdargestellte Beleuchtungseinrichtung, die wahlweise vom Sonnenblendenkörper 1 beabstandet, z. B. im Fahrzeughimmel oder im Sonnenblendenkörper 1 untergebracht ist.

Die elektrische Stromversorgung der Beleuchtungseinrichtung erfolgt über die allgemeine Fahrzeugelektrik, d. h. die Beleuchtungseinrichtung ist mit dem Stromversorgungsnetz eines Fahrzeugs verbindbar. Im Ausführungsbeispiel nach Fig. 1 sind zwei elektrische Leiterdrähte 12, 13 durch die Sonnenblendenachse 6 geführt und tragen an einem Ende einen Stecker 14 und am anderen Ende jeweils ein Kontaktelement 15, 16. Der grundsätzliche Aufbau der Sonnenblendenachse wird nicht beschrieben, weil er z. B. durch die DE 41 18 913 C1 bekannt ist.

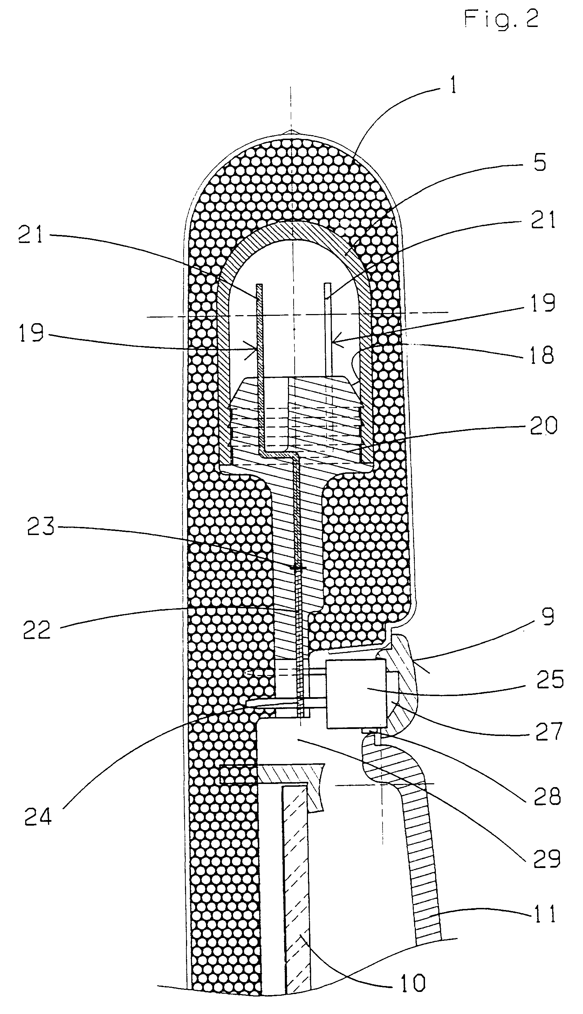

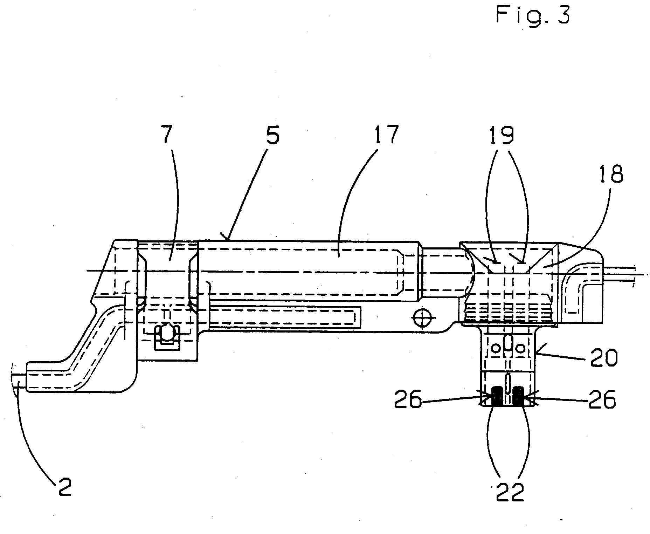

In die Bohrung 17 des bevorzugt als Kunststoff-Spritzgußteil ausgebildeten Lagergehäuses 5 mündet etwa rechtwinklig eine Stecköffnung 18 ein zur Aufnahme eines Kontaktelemente 19 tragenden Stopfens 20. Der Stopfen 20 besteht aus einem Kunststoff-Spritzgußteil und die Kontaktelemente 19 sind mit dem Stopfen 20 durch Umspritzen verbunden. Jedes der Kontaktelemente 19 nach Fig. 2 und 3 weist einen Blechstreifen 21 aus Buntmetall und eine damit einendig, z. B. durch Schweißen (bei 23) verbundene Litze 22, die aus einem Kupferfadengewirke bestehen kann, auf. Die Blechstreifen 21 überragen den Stopfen 20 einendig und bilden mit den Kontaktelementen 15, 16 der Sonnenblendenachse 6 kontaktierbare Kontaktfedern. Die Litzen 22 schließen unterendig mit dem Stopfen 20 ab und sie sind nahezu vollständig im Stopfenmaterial eingebettet. Um die Litzen jedoch für die Kontaktstifte 24 eines Mikroschalters 25 zugänglich zu machen, weist der Stopfen 20 fensterartige Öffnungen 26 auf.

Der Mikroschalter 25 ist in eine Ausnehmung 27 des zur Spiegelkassette 9 gehörenden Spiegelrahmens eingeklipst. Durch die Montage der Spiegelkassette 9, die z. B. entsprechend der Lehre der DE 43 02 607 A1 - siehe auch EP-A-0609558 - erfolgen kann, werden die Kontaktstifte 24 des Mikroschalters 25 mit den Litzen 22 nicht nur in Kontaktberührung, sondern in eine die Litzen 22 durchsetzende Anordnung gebracht, die eine zuverlässige Kontaktierung bewirkt. Der Mikroschalter 25 wird durch Auf- und Zuklappend des Deckels 11, der gegen den Schaltknopf 28 wirkt, betätigt.

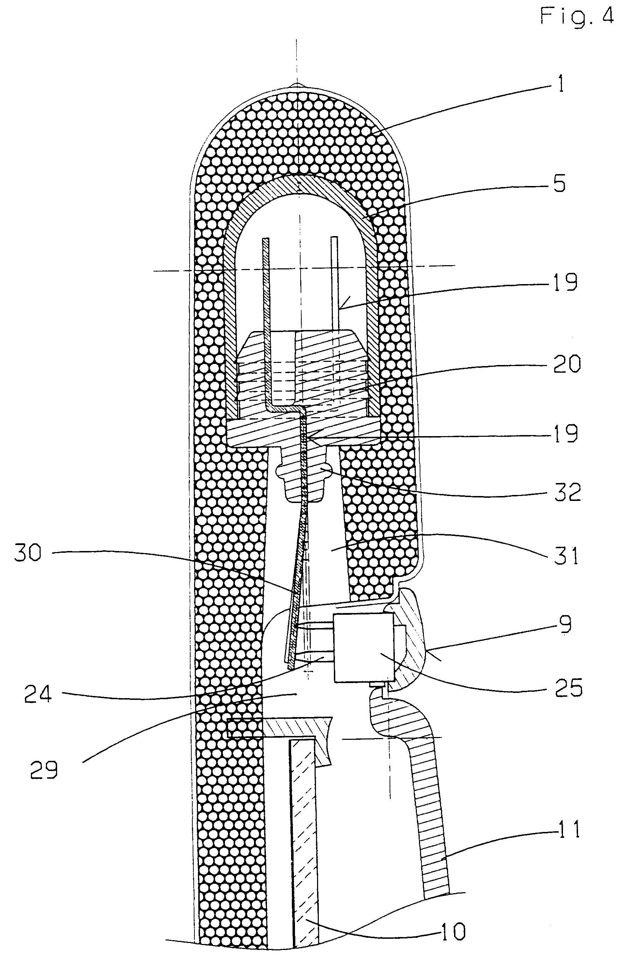

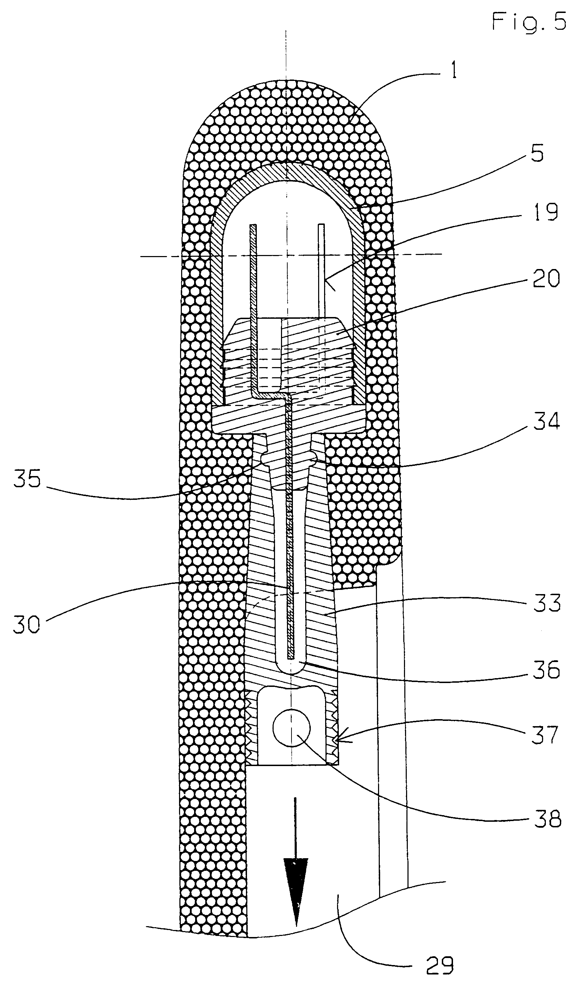

Beim Ausführungsbeispiel nach Fig. 4 ist vorgesehen, daß die Kontaktelemente 19 den Stopfen 20 sowohl mit oberen Kontaktfedern als auch mit unteren Kontaktfedern 30 überragen. Dabei befinden sich die unteren Kontaktfedern 30 in einer schaumfrei gehaltenen Öffnung 31 im Sonnenblendenkörper 1 und die Öffnung 31 mündet in die zur Aufnahme der Spiegelkassette 9 vorgesehene Ausnehmung 29 im Sonnenblendenkörper 1 ein. Bei der Montage der Spiegelkassette 9, werden die Kontaktstifte 24 des Mikroschalters 25 in Berührungskontakt mit den unteren Kontaktfedern 30 gebracht, derart, daß die Kontaktfedern 30 aus ihrer geradlinig verlaufenden Lage (vgl. Fig. 5) herausgebogen werden, um dann unter permanenter Federspannung an den Kontaktstiften 24, wie in Fig. 4 gezeigt anzuliegen.

Der Stopfen 20 ist an seinem dem Lagergehäuse 5 abgewandten Ende einstückig mit einem Zapfen 32 ausgebildet. Der Zapfen 32 dient zur lösbaren Halterung eines Hilfsstopfens 33, der beim Schäumen des Sonnenblendenkörpers 1 dazu dient, die Öffnung 31 schaumfrei zu halten und die Kontaktfedern 30 beim Schäumen zu schützen. Für eine zuverlässige Halterung ist der Zapfen 32 mit einem Ringwulst 34 und der Hilfsstopfen 33 mit einer darüber klipsbaren Ringnut 35 ausgebildet. Der Hilfsstopfen 33 weist eine nach unten verschlossene Öffnung 36 für die Aufnahme der unteren Kontaktfedern 30 auf.

Nach dem Schäumvorgang ist der Hilfsstopfen 33 wieder zwecks Freilegung der Kontaktfedern 30 vom Zapfen 32 zu entfernen, wobei er gemäß Pfeil in Fig. 5 in die Ausnehmung 29 hineinzuziehen ist. Um diesen Vorgang zu erleichtern, ist der Hilfsstopfen 33 mit Angriffsflächen für ein Abziehwerkzeug ausgebildet, wie mit Riffelungen 37 und/oder Löchern 38. Der Hilfsstopfen 33 ist vorteilhafterweise wiederverwertbar und verteuert daher die Sonnenblendenherstellung nicht.

## Patentansprüche

1. Sonnenblende für Fahrzeuge, im wesentlichen bestehend aus einem plattenförmigen Sonnenblendenkörper (1) aus Schaumkunststoff mit etwa rechteckiger Kontur, der eine eingelagerte Verstärkungseinlage (2) und in einem Eckbereich ein damit verbundenes Lagergehäuse (5) aufweist, welches mit einer sich etwa parallel zur oberen Längskante des Sonnenblendenkörpers (1) erstreckenden Bohrung (17) zur Aufnahme eines Endbereichs einer Sonnenblendenachse (6) und mit einer etwa rechtwinklig in die Bohrung (17) übergehenden Stecköffnung (18) zur Aufnahme eines Stopfens (20) ausgebildet ist, wobei die Sonnenblendenachse (6) mit einem eingelagerten elektrischen Leiter und am lagergehäuseseitigen Endbereich mit einem außenliegenden Kontaktelement versehen ist und wobei der Stopfen (20) aus einem Kunststoff-Spritzgußteil besteht und ein durch Umspritzen gehaltenes elektrisches Kontaktelement (19) trägt, dessen den Stopfen (20) einendig überragender Endbereich eine mit der Sonnenblendenachse (6) kontaktierbare Kontaktfeder bildet und dessen den Stopfen (20) anderendig überragender Endbereich für die Herstellung einer Verbindung mit einem Mikroschalter (25) dient, der an einer am Sonnenblendenkörper (1) sitzenden Spiegelkassette (9) befestigt ist und von einer zur Spiegelkassette (9) gehörenden Spiegelabdeckung (11) betätigbar ist, dadurch gekennzeichnet, daß die Sonnenblendenachse (6) mit eingelagerten elektrischen Leitern (12, 13) und am lagergehäuseseitigen Endbereich mit zwei außenliegenden Kontaktelementen (15, 16) versehen ist, daß der Stopfen (20) durch Umspritzen gehaltene elektrische Kontaktelemente (19) trägt, deren den Stopfen (20) einendig überragenden Endbereiche mit der Sonnenblendenachse (6) kontaktierbare Kontaktfedern bilden und daß die anderen Endbereiche der im Stopfen (20) eingelagerten Kontaktelemente (19) unmittelbar mit Kontaktstiften (24) des Mikroschalters (25) kontaktieren.

2. Sonnenblende nach Anspruch 1, dadurch gekennzeichnet, daß die im Stopfen (20) eingelagerten Kontaktelemente (19) jeweils aus einem Blechstreifen (21) und jeweils aus einer daran einendig befestigten Litze (22) aus Metallfäden bestehen, wobei die Blechstreifen (21) jeweils mit der Sonnenblendenachse (6) und die Litzen (22) jeweils mit den sie durchdringenden Kontaktstiften (24) des Mikroschalters (25) kontaktieren.

3. Sonnenblende nach Anspruch 2, dadurch gekennzeichnet, daß die Litzen (22) für die Kontaktstifte (24) des Mikroschalters (25) durch im Stopfen (20) ausgebildete fensterartige Öffnungen (26) zugänglich sind.

4. Sonnenblende nach Anspruch 1, dadurch gekennzeichnet, daß die Kontaktelemente (19) den Stopfen (20) sowohl mit oberen Kontaktfedern als auch mit unteren Kontaktfedern (30) überragen, daß die unteren Kontaktfedern (30) sich in einer schaumfrei gehaltenen Öffnung (31) im Sonnenblendenkörper (1) befinden, daß die Öffnung (31) für die unteren Kontaktfedern (30) in eine zur Aufnahme der Spiegelkassette (9) vorgesehene Ausnehmung (29) im Sonnenblendenkörper (1) einmündet und daß die unteren Kontaktfedern (30) unter Federspannung an den Kontaktstiften (24) des Mikroschalters (25) anliegen.

5. Sonnenblende nach Anspruch 4, dadurch gekennzeichnet, daß der Stopfen (20) an seinem dem Lagergehäuse (5) abgewandten Endbereich einstückig mit einem Zapfen (32) zur lösbaren Halterung eines zum Übergreifen der unteren Kontaktfedern (30) und zum Schaumfreihalten der Öffnung (31) im Sonnenblendenkörper (1) dienenden Hilfsstopfens (33) ausgebildet ist.

6. Sonnenblende nach Anspruch 5, dadurch gekennzeichnet, daß der Zapfen (32) des Stopfens (20) mit einer Ringwulst (34) und der Hilfsstopfen (33) mit einer darüber klipsbaren Ringnut (35) und darüber hinaus mit Angriffsflächen für ein Abziehwerkzeug ausgebildet ist.

## Claims

1. Sun visor for vehicles, essentially comprising a flat, approximately rectangular-shaped sun-visor body (1) which is made of plastic foam and has a reinforcing insert (2) embedded in it and, in a corner region, a bearing housing (5) which is connected to said insert and is designed with a hole (17) which extends approximately parallel to the upper longitudinal edge of the sun-visor body (1) and is intended to receive an end region of a sun-visor spindle (6), and with a plug-in opening (18) which merges approximately at right angles into the hole (17) and is intended to receive a stopper (20), the sun-visor spindle (6) being provided with an electric lead embedded in it and, on the end region towards the bearing housing, with an external contact element, and the stopper (20) comprising an injection-moulded plastic part and bearing an electric contact element (19) which is held in place by being encapsulated by injection moulding, that end region of the contact element which projects over the stopper (20) at one end forming a contact spring which can make contact with the sun-visor spindle (6), and that end region which projects over the stopper (20) at the other end serving to make a connection to a microswitch (25) which is fastened to a mirror unit (9) seated upon the sun-visor body (1) and can be actuated by a mirror cover (11) belonging to the mirror unit (9), characterized in that the sun-visor spindle (6) is provided with electric leads (12, 13) embedded in it and, on the end region towards the bearing housing, with two external contact elements (15, 16), in that the stopper (20) bears electric contact elements (19) which are held in place by being encapsulated by injection moulding, those end regions of which contact elements which protrude over the stopper (20) at one end forming contact springs which can make contact with the sun-visor spindle (6), and in that the other end regions of the contact elements (19) which are embedded in the stopper (20) make direct contact with contact pins (24) of the microswitch (25).

2. Sun visor according to Claim 1, characterized in that the contact elements (19) which are embedded in the stopper (20) each comprise a metallic strip (21) and a strand (22) which is made of metallic filaments and is fastened to the metallic strip at one end, the metallic strips (21) each making contact with the sun-visor spindle (6) and the strands (22) each making contact with those contact pins (24) of the microswitch (25) which pass through them.

3. Sun visor according to Claim 2, characterized in that the strands (22) for the contact pins (24) of the microswitch (25) are accessible through window-like openings (26) formed in the stopper (20).

4. Sun visor according to Claim 1, characterized in that the contact elements (19) protrude over the stopper (20) with both upper contact springs and with lower contact springs (30), in that the lower contact springs (30) are located in an opening (31) in the sun-visor body (1), which opening is kept free of foam, in that the opening (31) for the lower contact springs (30) opens into a recess (29) in the sun-visor body (1), the recess being provided to receive the mirror unit (9), and in that the lower contact springs (30) bear under spring tension against the contact pins (24) of the microswitch (25).

5. Sun visor according to Claim 4, characterized in that on its end region which faces away from the bearing housing (5), the stopper (20) is designed integrally with a peg (32) to releasably secure an auxiliary stopper (33) which serves to fit over the lower contact springs (30) and to keep the opening (31) in the sun-visor body (1) free of foam.

6. Sun visor according to Claim 5, characterized in that the peg (32) of the stopper (20) is designed with an annular bead (34) and the auxiliary stopper (33) is designed with an annular groove (35) which can be clipped over said bead and, moreover, is designed with engagement surfaces for a withdrawing tool.

## Revendications

1. Pare-soleil pour véhicules, constitué essentiellement d'un corps de pare-soleil (1) de forme plate en matière plastique alvéolaire, de contour approximativement rectangulaire, qui présente un insert de renforcement (2) incorporé et un logement de palier (5) relié à celui-ci dans une zone de coin, lequel est formé avec un alésage (17) s'étendant approximativement parallèlement jusqu'à l'arête longitudinale supérieure du corps de pare-soleil (1), destiné à recevoir une zone d'extrémité d'un axe (6) de pare-soleil et avec une ouverture d'enfichage (18) passant approximativement à angle droit dans l'alésage (17), pour recevoir un bouchon (20), l'axe (6) du pare-soleil étant pourvu d'un conducteur électrique incorporé, et au niveau de la zone d'extrémité du côté du logement de papier, d'un élément de contact se trouvant à l'extérieur, et le bouchon (20) se composant d'une pièce de moulage par injection en plastique et portant un élément de contact électrique (19) encastré par injection, dont la zone d'extrémité dépassant par une extrémité du bouchon (20) forme un ressort de contact contactable par l'axe (6) du pare-soleil, et dont la zone d'extrémité dépassant par l'autre extrémité du bouchon (20), sert à la réalisation d'une connexion avec un minirupteur (25), qui est fixé sur une cassette de miroir (9) reposant sur le corps du pare-soleil (1), et est activable par un recouvrement de miroir (11) appartenant à la cassette de miroir (9), caractérisé en ce que l'axe (6) du pare-soleil est pourvu de conducteurs électriques incorporés (12, 13) et au niveau de la zone d'extrémité du côté du logement de palier, de deux éléments de contact (15, 16) se trouvant à l'extérieur, en ce que le bouchon (20) porte des éléments de contact électriques (19) encastrés par injection, dont les zones d'extrémité dépassant d'un côté du bouchon (20) forment des ressorts de contact contactables avec l'axe (6) du pare-soleil et en ce que les autres zones d'extrémité des éléments de contact incorporés dans le bouchon (20) viennent directement en contact avec des broches de contact (24) du minirupteur (25).

2. Pare-soleil selon la revendication 1, caractérisé en ce que les éléments de contact (19) incorporés dans le bouchon (20) se composent respectivement d'une bande de jonction (21) et d'un toron (22) de fils métalliques fixé par une extrémité à celle-ci, les bandes de jonction (21) venant en contact respectivement avec l'axe (6) du pare-soleil et les torons (22) avec les broches de contact (24) du minirupteur (25) les traversant.

3. Pare-soleil selon la revendication 2, caractérisé en ce que les torons (22) pour les broches de contact (24) du minirupteur (25) sont accessibles par des ouvertures (26) de type fenêtre formées dans le bouchon (20).

4. Pare-soleil selon la revendication 1, caractérisé en ce que les éléments de contact (19) du bouchon (20) dépassent avec les ressorts de contact supérieurs et aussi avec les ressorts de contact (30) inférieurs, en ce que les ressorts de contact inférieurs (30) se trouvent dans une ouverture (31) maintenue exempte de matière alvéolaire dans le corps du pare-soleil (1), en ce que l'ouverture (31) pour les ressorts de contact inférieurs (30) débouche dans un évidement (29) prévu pour recevoir la cassette de miroir (9) dans le corps du pare-soleil (1) et en ce que les ressorts de contact inférieurs (30) s'appuient sous l'effet de la tension de ressort contre les broches de contact (24) du minirupteur (25).

5. Pare-soleil selon la revendication 4, caractérisé en ce que le bouchon (20) est formé au niveau de sa zone d'extrémité opposée au logement de palier (5) d'une pièce avec un tourillon (32) en vue d'une fixation desserrable d'un bouchon auxiliaire (33) servant à recouvrir les ressorts de contact inférieurs (30) et à maintenir exempte de matière alvéolaire l'ouverture (31) dans le corps du pare-soleil (1).

6. Pare-soleil selon la revendication 5, caractérisé en ce que le tourillon (32) du bouchon (20) est formé avec un tore (34) et le bouchon auxiliaire (33) avec une rainure annulaire (35) pouvant être clipsée par-dessus, et en outre avec des surfaces d'engagement pour un outil d'extraction.
